# EUROPEAN PATENT SPECIFICATION

(11) **EP 2 117 067 B1**
(45) Date of publication and mention of the grant of the patent: **13.08.2014**
(21) Application number: 08103880.4
(22) Date of filing: 09.05.2008
(51) Int. Cl.: H01M 8/12, H01M 4/88, H01M 4/86

(54) **Control process for specific porosity/gas permeability of electrode layers of SOFC-MEA through combination of sintering and pore former technology**
Steuerungsverfahren für spezifische Porosität/Gaspermabilität von Elektrodenschichten einer SOFC-MEA mittels einer Kombination aus Sinter- und Porenbildungstechnologie
Processus de contrôle pour la porosité spécifique/perméabilité au gaz de couches d'électrodes de SOFC-MEA via une combinaison de technologies de frittage et de formation de pores

(43) Date of publication of application: 11.11.2009
(73) Proprietor: Institute of Nuclear Energy Research, Longtan Township, T'ao yuan 32546 (TW)
(72) Inventor: Lee, Maw-Chwain, 32546 Taoyuan County (TW); Chang, Yang-Chuang, 32546 Taoyuan County (TW); Lin, Tai-Nan, 32546 Taoyuan County (TW); Kao, Wei-Xin, 32546 Taoyuan County (TW); Wang, Chun-Hsiu, 32546 Taoyuan County (TW); Lin, Li-Fu, 32546 Taoyuan County (TW)
(74) Representative: Lermer, Christoph

(56) References cited:
- EP-A- 1 699 104
- EP-A- 1 760 817
- WO-A-2004/100284
- WO-A-2007/082209

## Description

### Background of the Invention

### 1. Field of the Invention

The invention relates to a manufacturing technology for the electrode layer of solid oxide fuel cell - membrane electrode assembly (SOFC -MEA). Especially, it refers to an innovative process that combines pore former and sintering technology to produce the electrode layer for SOFC-MEA with specific porosity and gas permeability. This manufacturing process to produce SOFC-MEA possesses high reliability and flexibility.

### 2. Description of the Prior Art

With increasing oil price and rising consciousness of environmental protection, renewable energy and high energy conversion technology is one of the most technological development in this century. Solid oxide fuel cell is a power generation system that has high efficiency, low pollution and high versatility of fuel sources. Besides, its features such as simple material composition, modulized structure and sustainable power generation ability make it the power generation system with the greatest potential.

Among all, planar solid oxide fuel cell can overcome long circuit loss and have uniform current collection, so it has increased cell power density. This is also why planar solid oxide fuel cell is the primary interest for most development teams in the world.

The development for the first-generation solid oxide fuel cell used electrolyte as cell supporting substrate (Electrolyte Supported Cell, ESC in short). But because the electrolyte layer was too thick (about 120 ∼ 150 micrometers), the resistance was increased and the power density was decreased. Thus, it relied on high temperature operation (about 850 ∼ 1000°C) to obtain desired cell performance, which limited the use of solid oxide fuel cell. The second-generation solid oxide fuel cell used electrode as supporting substrate and anode supported cell (ASC) was the primary cell structure in development. Such cell used over 600 micrometer thick anode as supporting substrate to provide cell with high mechanical strength, and coated electrolyte( 5~20 micrometers )and cathode( 30 ~ 50 micrometers ) in sequence onto the anode substrate. Because the electrolyte thickness was decreased, its operation temperature could be lowered to about 700 - 850°C, which not only solved the material sealing issue with the planar solid oxide fuel cell but also lowered its manufacturing cost. This type of cell also greatly stimulated the development and applications of solid oxide fuel cell. Presently, many countries in the world have started huge investment in the development of solid oxide fuel cell. Besides, there are companies that can produce anode supported cells in a large scale that is leading the solid oxide fuel cell to commercialization.

The electrode layer of solid oxide fuel cell is porous to enhance the transport of fuel gases and oxidant gases. Usually, it simply adjusts the amount of pore former to control the porosity of the electrode supporting substrate. Present research reports indicated the pore volume percentage should be between 10% and 25%. However, high porosity will cause the decrease in mechanical strength of electrode supporting cell and tend to damage unit cell. But low porosity will cause concentration polarization and decrease cell performance.

Document EP 1 699 104 A1 discloses an electrochemical gas operation device based on oxygen fuel-contacting solid electrolytes having the practical applications in the production of high-purity oxygen from air and in the removal of residual oxygen from inert gases such as argon and nitrogen, each cell is fabricated with multiple layers or components including an electrolyte layer, anode and cathode layers in contact with the electrolyte layer and interconnected layers in contact with the anode and cathode.

Document WO 2004/100284 A discloses a solid oxide fuel cell assembly, comprising a substantially planar array of fuel cells on a substrate, wherein each cell comprises a cathode, anode, electrolyte and electrode interconnected component structure, each component structure of each cell has a sub-planar arrangement of one component structure to another; and a fuel cavity adjacent to the sub-planar electrode arrangement, wherein the assembly provides a reduced resistance to current flow with increased cell number.

Document WO 2007/ discloses a SOFC-component including a first electrode, an electrolyte overlaying in the first electrode and a second electrode overlaying the electrolyte. The second electrode includes a bulk layer portion and a functional layer portion, wherein the functional layer portion is an interfacial layer extending between the electrolyte and the bulk layer portion of the second electrode, wherein the bulk laver portion has a bi-model pore sized distribution.

Therefore, the invention used a novel process that combined pore former and sintering technology to produce the electrode layer for solid oxide fuel cell - membrane electrode assembly with specific porosity and gas permeability as well as high mechanical strength and high process reliability.

### Summary of the Invention

The main objective for the invention is to develop the manufacturing process for the electrode layer of solid oxide fuel cell - membrane electrode assembly with specific porosity and gas permeability.

To achieve the above objective, the invention used a novel process that combined pore former and sintering technology. Taking anode supported cell (ASC) as example, the process in the invention added pore former into anode slurry and used ball mill to obtain uniform mixing. The composition of the anode slurry was NiO, 8YSZ, solvent, dispersant, plasticizer and binder. The electrode green tape was made by tape casting technology, followed by lamination technology to adjust substrate thickness and geometric structure. Anode green substrate was subject to high-temperature sintering, which used the control setting for temperature profile of sintering cycle (sintering curve) for sintering atmosphere and gas flow rate. Finally, the process could produce anode supported cell with specific porosity and gas permeability.

In a preferred embodiment, the ingredient for the above pore former was graphite in a weight percent of 0.1 ~ 10 %, or pore former index of 0.1 ~ 10. The pore former index is defined as the weight of added pore former in grams per 100 grams of anode powder.

In a preferred embodiment, the above mentioned sintering temperature could be 1250 ~ 1400°C, and temperature increasing rate was 0.2 ~ 1°C, and temperature decreasing rate was 0.5~1°C, and sintering atmosphere was air with flow rate of 1~60 cm³/min (0~60 c.c./min).

### Detailed Description of the Preferred Embodiment

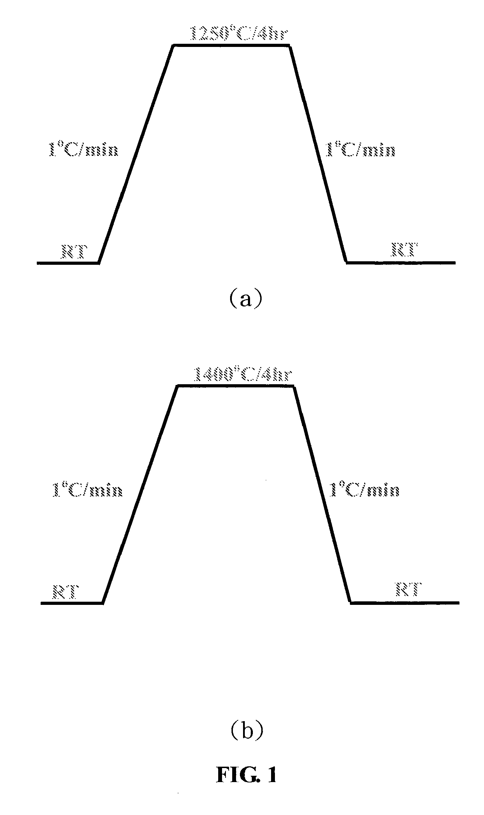

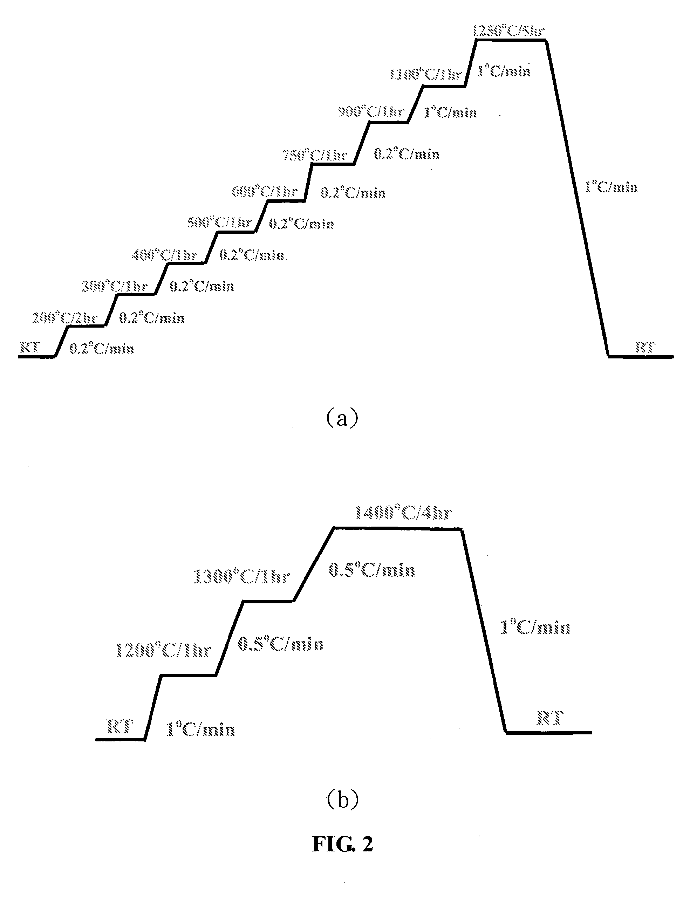

The manufacturing technology for solid oxide fuel cell in the invention is a novel process that combines pore former and sintering technology to produce the electrode layer of solid oxide fuel cell - membrane electrode assembly with specific porosity and gas permeability. This manufacturing process to produce SOFC-MEA possesses high reliability and flexibility, and at least consists of the following steps:
Step I : Produce anode supported cell. First, prepare 50% NiO and 50% 8YSZ (8mol. % Yttria-Stablized Zirconia) by weight, and a specific amount of pore former (graphite) as basic composition. Add a proper amount of solvent (Ethanol/Ethyl Methyl Ketone, MEK), dispersant (Tri-Ethanolamine, TEA), plasticizer (Polyethylene Glycol, PEG /Dibutyl phthalate, DBP) and binder (Polyvinyl Butyral, PVB). Use ball mill for uniform mixing. Use tape casting to make electrode green tape. Use lamination to make 1000µm thick anode green substrate with dimensions of 5x5cm² and 10x10cm².
Step 2: Conduct high-temperature sintering of green substrate to obtain anode ceramic substrate (or anode supported substrate). The sintering for green substrate has two cycles: in the first cycle temperature rises to 1250°C; in the second cycle, the temperature rises to 1400°C. The sintering curve in the process has two kinds: for the first kind, both temperature increasing rate and decreasing rate are fixed at 1°C/min (sintering curve A, as shown in Figure 1); for the second kind, the temperature increasing rate is 0.2 - 1°C and temperature decreasing rate is 0.5 ~ 1°C (sintering curve B, as shown in Figure 2). The sintering atmosphere was air with flow rate of 1~60 cm³/min (0~60 c.cJmin).
Step 3: Use pycnometer and analytical equipment for gas permeability to measure porosity and gas permeability of anode supported cell. Also measure the mechanical strength of anode supported substrate as references for quality control.

Through the above steps, anode ceramic substrate could be made for solid oxide fuel cell with specific porosity and gas permeability. The following describes the embodiments for the invention in details:

### Embodiment I

Step 1: Prepare 50% NiO and 50% 8YSZ by weight, and a specific amount of pore former (graphite) as basic composition. Anode powder (NiO + 8YSZ) takes up 35- 80% by weight. The pore former takes up 0 - 4 % of anode powder by weight, or the pore former index is 0 - 4. Add a proper amount of solvent (Ethanol/Ethyl Methyl Ketone), dispersant (Tri-Ethanolamine), plasticizer (Polyethylene Glycol, PEG /Dibutyl phthalate) and binder (Polyvinyl Butyral) in weight percent of 15 ~ 25%, 1 ~ 2 %, 2 ~ 3% and 3 ~ 6%, respectively. Then, use ball mill for uniform mixing for 24 - 48 hours. Use tape casting to make anode green substrate. Then, use lamination technology to make 800 - 1200µm thick green substrate with dimensions of 5x5cm² and 10x10cm².

Step 2: Conduct high-temperature sintering for green substrate at 1250°C. The temperature increasing rate and decreasing rate are fixed at 1°C/min. Conduct the second high-temperature sintering at 1400°C to increase the strength for the anode substrate. The temperature increasing rate and decreasing rate are also fixed at 1°C/min (sintering curve A). The sintering condition does not include any passing gases. Through the above process, anode supported cell is obtained.

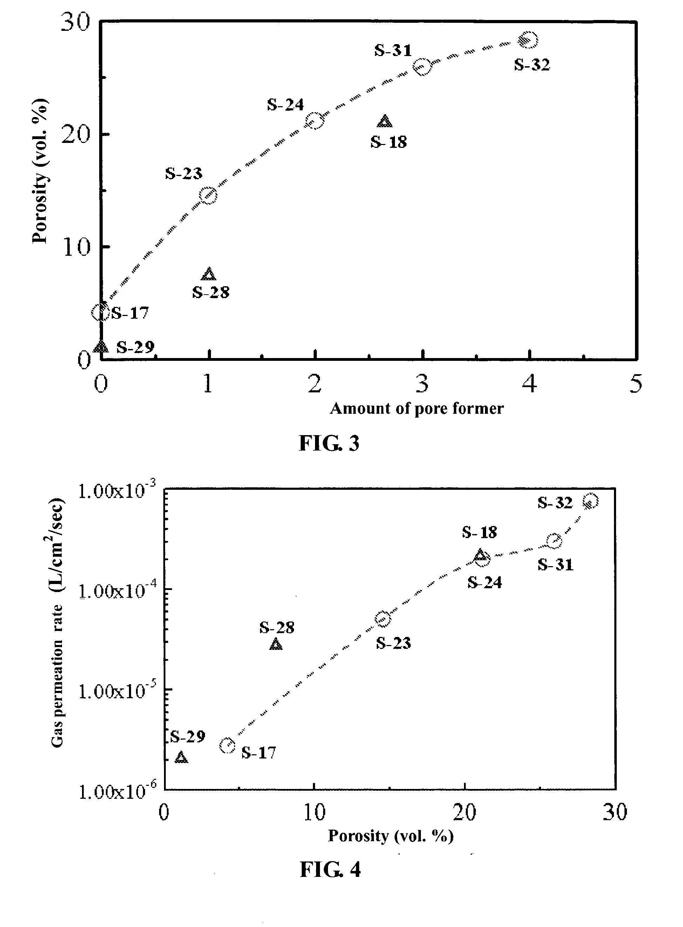

Step 3: Use pycnometer to analyze the obtained anode supported cell. Refer to Figure 3, which indicates the relationship between pore former amount and anode supported cell porosity with vertical axis for porosity (%) and horizontal axis for pore former index. It is known from Figure 3 that with increasing pore former, i.e. increasing pore former weight percent, the porosity of anode supported cell also increases, but gradually levels off. This indicates addition of pore former can provide the required porosity of anode substrate. Usually the optimal porosity range is 15 ~ 35%. However, excessively high pore former index has limited effect on the increase in porosity, and also lowers the mechanical strength and production yield of the anode supported cell. It takes special attention for the amount of pore former.

Use the gas permeability equipment to analyze the obtained anode supported cell. Refer to Figure 4, which indicates the relationship between porosity and gas permeability for the anode supported cell under different pore former indexes with horizontal axis for porosity (%) and vertical axis for gas permeability (L/cm²/sec). It is known from Figure 4 that the gas permeability greatly increases with the increasing of porosity, which facilitates the transport and reaction for gases in the anode substrate.

### Embodiment 2

Step I : Prepare 50% NiO and 50% 8YSZ by weight, and a specific amount of pore former (graphite) as basic composition. Anode powder (NiO + 8YSZ) takes up 35 - 80% by weight. The pore former takes up 0 - 4 % of anode powder by weight, or the pore former index is 0- 4. Add a proper amount of solvent (Ethanol/Ethyl Methyl Ketone), dispersant (Tri-Ethanolamine), plasticizer (Polyethylene Glycol, PEG /Dibutyl phthalate) and binder (Polyvinyl Butyral) in weight percent of 15 ~ 25%, 1 - 2 %, 2 - 3% and 3 - 7%, respectively. Then, use ball mill for uniform mixing for 24 - 48 hours. Use tape casting to make anode green substrate. Then, use lamination technology to make 800 - 1200µm thick green substrate with dimensions of 5x5cm² and 10x10cm².

Step 2: Conduct high-temperature sintering for green substrate at 1250°C. The temperature increasing rate is 0.2 - 1°C /min, while the temperature decreasing rate is 1°C/min. Conduct the second high-temperature sintering at 1400°C to increase the strength of the anode substrate. The temperature increasing rate is 0.5 ~ 1°C/min, while the temperature decreasing rate is 1°C/min (sintering curve B). Sintering could use air if necessary with gas flow rate of 1~60 cm³/min (1~60 c.c. /min). Through the above process, anode supported cell is obtained.

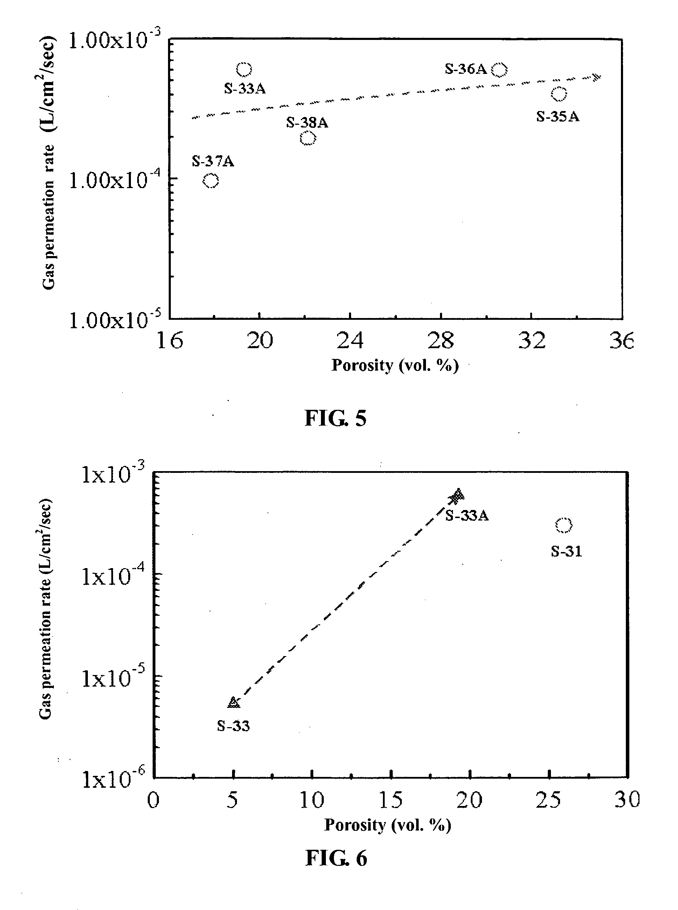

Step 3: Use pycnometer and gas permeability equipment to analyze the obtained anode supported cell. Refer to Figure 5, from which it is known that when a proper amount of air is

passed during sintering, anode supported cell porosity is larger than 15% (volume percent), and gas permeability is larger than 1 × 10⁻⁴ L/cm²/sec. But the addition of pore former does not have significant effect for improvement.

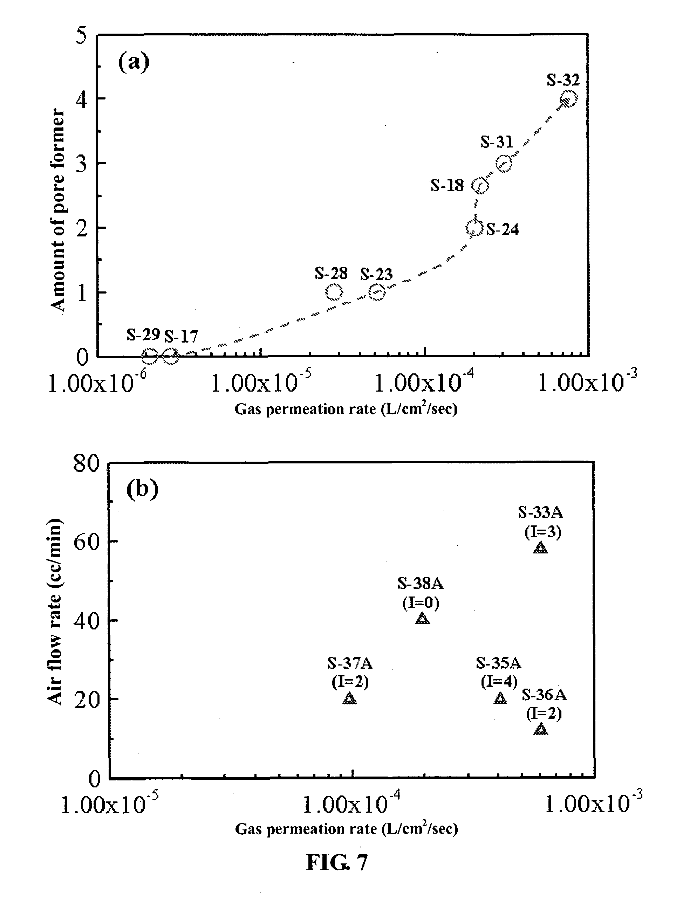

Figure 6 shows the relationship between the porosity and gas permeability for anode supported cell under different sintering curves and sintering atmosphere (red hollow circle for sintering curve A, blue hollow triangle for sintering curve B). It is known from Figure 6 that under low temperature increasing rate (sintering curve B) both the porosity and gas permeability of anode supported cell clearly decrease. But it is through the adjustment of the flow rate of passing air to control the porosity and gas permeability of anode supported cell. Figure 7 shows the relationship between the porosity and gas permeability of anode supported cell under different pore former index (sintering curve A) or air flow rate (sintering curve B). It is known from Figure 7 that to obtain desired gas permeability (larger than 1 × 10⁻⁴ L/cm²/sec) for anode supported cell the pore former index should be higher than 2. But if passing air is used, it is simpler to prepare the anode supported cell with high gas permeability. Please refer to Table 1 for operation conditions and analytical results for all samples.

The result indicates sintering curve B provides better production yield. But the benefit of using pore former to control porosity and gas permeability for the anode supported cell is limited. If additional sintering atmosphere and passing gas are used, it can obtain the anode supported cell with optimal porosity and gas permeability (porosity 15 ~ 35%, gas permeability larger than 1 × 10⁻⁴ L/cm²/sec). The electrode supported cell for solid oxide fuel cell produced by the process in the invention has specific porosity and gas permeability as well as high mechanical strength and high yield. The product will also meet the requirements by SOFC-MEA manufacturers. It shall meet the requirements for application of patent, which filing is thus submitted.

The content for the above embodiment does not limit the scope of the invention. Those alterations and modifications based on the principles of the invention shall be also covered by the invention

The scope for the protection by the invention shall be according to the claims by the invention.

**Table 1**

| Sample No. | Pore former index | Sintering curve | Gas volume flow rate (c.c./min) | Porosity (vol. %) | Gas permeability (L/cm²/sec) |
|---|---|---|---|---|---|
| S-17 | 0 | A | 0 | 4.18 | 2.79×10⁻⁶ |
| S-18 | 2.65 | A | 0 | 21.01 | 2,18×10⁻⁴ |
| S-23 | 1 | A | 0 | 14.53 | 5.10×10⁻⁵ |
| S-24 | 2 | A | 0 | 21.16 | 2.02×10⁻⁴ |
| S-28 (60%YSZ) | 1 | A | 0 | 7.44 | 2.78×10⁻⁵ |
| S-29 (65%YSZ) | 0 | A | 0 | 1.09 | 2.08×10⁻⁶ |
| S-31 | 3 | A | 0 | 25.96 | 3.04×10⁻⁴ |
| S-32 | 4 | A | 0 | 28.35 | 7.68×10⁻⁴ |
| S-33 | 3 | B | 0 | 5.05 | 5.33×10⁻⁶ |
| S-33A | 3 | B | 58 (air) | 19.30 | 6.02×10⁻⁴ |
| S-35A | 4 | B | 20 (air) | 33.20 | 4.07×10⁻⁴ |
| S-36A | 2 | B | 12 (air) | 30.57 | 6.02×10⁻⁴ |
| S-37A | 2 | B | 20 (air) | 17.84 | 9.75×10⁻⁵ |
| S-38A | 0 | B | 40 (air) | 22.14 | 1.96×10⁻⁴ |

### Brief Description of the Drawings

Figure 1 is the sintering temperature setting program A for anode green substrate (sintering curve A), including (a) the first cycle, and (b) the second cycle.
Figure 2 is the sintering temperature setting program B for anode green substrate (sintering curve B), including (a) the first cycle, and (b) the second cycle.
Figure 3 is the relationship between the amount of pore former and the porosity for anode supported cell.
Figure 4 is the relationship between the porosity and gas permeability for anode supported cell under different pore former indexes.
Figure 5 is the relationship between the porosity and gas permeability for anode supported cell under different pore former indexes and gas flow rates.
Figure 6 is the relationship between the porosity and gas permeability for anode supported cell under different sintering curves and sintering atmospheres.
Figure 7 shows gas permeability for anode supported cell under (a) different pore former indexes (sintering curve A) or (b) different air flow rates (sintering curve B, I representing Pore Former Index).

## Claims

1. (Currently amended) A manufacturing process for the electrode layer of solid oxide fuel cell (SOFC) with specific porosity and gas permeability; the process that combines sintering and pore former technology comprises following steps:
a) preparing a green substrate of electrode with a composition of anode powder 50% NiO and 50% 8YSZ with 35- 80% by weight, pore former with 0 - 4 % of anode powder by weight, and adding by weight a solvent 15 - 25%, a dispersant 1 ~ 2 %, a plasticizer 2 - 3%, and a binder 3 - 6%, respectively, wherein the composition is mixed using a ball mill for grinding for 24 - 48 hours, and followed by known process tape casting to make green substrate;
b) conducting sintering for SOFC electrode green tape from Step a to produce SOFC electrode/ anode ceramic supported substrate; the sintering process is carried out in a furnace including (1) first process sintering at 1250°C for 4 hours with temperature increasing rate 0.2~1°C/min and decreasing rate of 1°C/min, respectively, for the sintering process between room temperature and 1250°C, and second process sintering at 1400°C for 4 hours with temperature increasing rate 0.5~1°C/min and decreasing rate of 1°C/min, respectively, for the sintering process between room temperature and 1400°C, and (2) air sintering atmosphere and gas flow rate 1~60 cm³/min (1 ~ 60 cc/min) to produce electrode supported cell with specific porosity 15~35% and gas permeability larger than 1 × 10⁻⁴ L/cm²/sec;
c) using pycnometer and analytical equipment for gas permeability to measure the porosity and gas permeability of the anode substrate produced in step b) to assure product quality.

2. (Previously entered). As described in claim 1 the manufacturing process for the electrode layer of solid oxide fuel cell, it can be planar, and the electrolyte materials is YSZ, GDC, LSGM, SDC and YDC, and the anode materials is NiO+YSZ, NiO+GDC, NiO+LSGM, NiO+SDC, and NiO+YDC, and the cathode materials is LSM and LSCF.

3. (Previously entered) As described in claim 1 the manufacturing process of the electrode layer for solid oxide fuel cell, the pore former in Step a is graphite, which at high temperature (higher than 200°C) is thermally decomposed or subject to pyrolysis; the amount of pore former is 0.1 ~ 10 % of anode materials or pore former index is 0.1 ~ 10.

4. (Previously entered) As described in claim 1 the manufacturing process for the electrode layer of solid oxide fuel cell, the sintering temperature in Step b is 1700°C, with gas tightness and gas flow control.

5. (Currently amended) As described in claim I the manufacturing process for the electrode layer of solid oxide fuel cell, the specific sintering atmosphere in Step b is air or inert gases, the preferred volume flow rate for air as passing gas is 1 ~60 cm³/min (1 ~ 60 cc/min).

6. (Currently amended) As described in claim 1 the manufacturing process for the electrode layer of solid oxide fuel cell, the equipment used in Step c to measure porosity is pycnometer, and for gas permeability measurement the pressure difference between the two sides of the anode supported cell is 0.0345 MPa (5 psig).

## Patentansprüche

1. Herstellungsprozess für die Elektrodenschicht einer Festoxid-Brennstoffzelle (SOFC) mit spezifischer Porosität und Gaspermeabilität; der Prozess, der Sintern und Porenausbildungstechnologie kombiniert, umfasst die folgenden Schritte:
a) Vorbereitung eines grünen Elektrodensubstrats mit einer Zusammensetzung aus Anodenpulver mit 50 % NiO und 50 % 8YSZ mit 35 - 80 Gewichts-%, Porenausbilder mit 0 - 4 Gewichts-% Anodenpulver, und Zugeben eines Lösungsmittels mit 15 - 25 Gewichts-%, 1 - 2 Gewichts-% eines Dispergators, bzw. 3 - 6 Gewichts-% eines Bindemittels, wobei die Zusammensetzung zum Mahlen über 24 - 48 Stunden mittels einer Kugelmühle vermischt wird, und gefolgt durch einen bekannten Prozess des Foliengießens zur Herstellung des grünen Substrats;
b) Durchführen des Sinterns der SOFC-Elektrode aus grüner Folie aus Schritt a) zur Herstellung eines von einer SOFC-Elektrode/Anodenkeramik getragenen Substrats; der Sinterprozess wird in einem Ofen durchgeführt, der aufweist (1), einen ersten Prozess des Sinterns bei 1250 °C für 4 Stunden mit einer Temperaturerhöhungsrate von 0.2 - 1 °C/min. bzw. einer Senkungsrate von 1 °C/min, für den Sinterprozess zwischen Raumtemperatur und 1250 °C, und einen zweiten Sinterprozess bei 1400 °C für 4 Stunden mit einer Temperaturerhöhungsrate von 0.5 - 1 °C/min bzw. einer Senkungsrate von 1 °C/min, für den Sinterprozess zwischen Raumtemperatur und 1400 °C, und (2) eine Luftsinteratmosphäre und eine Gasflussrate von 1 - 60 cm³/min (1 - 60 cc/min) zur Herstellung einer von der Elektrode getragenen Zelle mit spezifischer Porosität von 15 - 35 % und Gaspermeabilität größer als 1 x 10 ⁻⁴ L/cm²/sec;
c) Die Nutzung eines Pyknometers und einer Analytikausrüstung für die Gaspermeabilität zur Messung der Porosität und der Gaspermeabilität des Anodensubstrates, das im Schritt b) hergestellt wurde, zur Sicherstellung der Produktqualität.

2. Herstellungsprozess für eine Elektrodenschicht einer Festoxid-Brennstoffzelle wie im Anspruch 1 beschrieben, die planer sein kann und deren Elektrolytmaterialien YSZ, GDC, LSGM, SDC und YDC sind, und deren Anodenmaterialien NiO + YSZ, NiO + GDC, NiO + LSGM, NiO +SDC, und NiO +YDC sind, und deren Kathodenmaterialien LSM und LSCF sind.

3. Herstellungsprozess für die Elektrodenschicht einer Festoxid-Brennstoffzelle wie im Anspruch 1 beschrieben, wobei der Porenausbilder im Schritt a) Graphit ist, das bei hoher Temperatur (höher als 200 °C) thermisch zersetzt wird oder aufgrund Pyrolyse; die Menge von Porenausbilder beträgt 0.1 - 10 % des Anodenmaterials oder der Porenausbilderindex beträgt 0.1 - 10.

4. Herstellungsprozess für die Elektrodenschicht einer Festoxid-Brennstoffzelle wie im Anspruch 1 beschrieben, wobei die Sintertemperatur im Schritt b) 1700 °C beträgt, wobei die Gasdichte und der Gasfluss gesteuert wird.

5. Herstellungsprozess für die Elektrodenschicht einer Festoxid-Brennstoffzelle wie im Anspruch 1 beschrieben, wobei die spezifische Sinteratmosphäre im Schritt b) Luft oder inerte Gase sind, die bevorzugte Volumenflussrate für Luft als vorbeifließendes Gas 1 - 60 cm³/min. (1 - 60 cc/min) beträgt.

6. Herstellungsprozess für die Elektrodenschicht einer Festoxid-Brennstoffzelle wie im Anspruch 1 beschrieben, wobei die im Schritt c) verwendete Ausrüstung zur Messung der Porosität ein Pyknometer ist, und der Druckunterschied zwischen den zwei Seiten der von der Anode getragenen Zelle für die Gaspermeabilitätsmessung 0.0345 MPa (5 psig) beträgt.

## Revendications

1. Procédé de fabrication de la couche d'électrodes d'une pile à combustible à oxyde solide (SOFC) avec une porosité et une perméabilité au gaz spécifiques, le procédé qui combine la technologie de frittage et de formation de pores comprenant les étapes suivantes :
a) préparation d'un substrat vert d'électrode avec une composition de poudre d'anode de 50% de NiO et de 50% de8YSZ avec 35 à 80% en poids, de formateur de pore avec 0 à 4% de poudre d'anode en poids et ajout de 15 à 25% de solvant en poids, 1 à 2% de dispersant, de 2 à 3% de plastifiant et de 3 à 6% d'un liant respectivement, la composition étant mélangée en utilisant un broyeur à boulets pour broyer pendant 24 à 48 heures, ceci étant suivi par le processus connu de coulage en bande pour faire un substrat vert ;
b) exécution du frittage pour la bande verte de l'électrode SOFC de l'étape a pour produire un substrat à base de céramique d'électrode/anode SOFC, le processus de frittage étant exécuté dans un four comprenant (1) premier processus de frittage à 1250°C pendant 4 heures avec respectivement une vitesse d'augmentation de la température de 0,2 à 1 °C/min et une vitesse de baisse de 1 °C/min pour le processus de frittage entre la température ambiante et 1250°C et un second processus de frittage à 1400°C pendant 4 heures avec respectivement une vitesse d'augmentation de la température de 0,5 à 1°Cmin et une vitesse de baisse de 1°C/min pour le processus de frittage entre la température ambiante et 1400°C et (2) une atmosphère de frittage dans l'air et un débit de gaz de 1 à 60 cm³/min (1~60 cc/min) pour produire une pile à électrodes avec une porosité spécifique de 15 à 35% et une perméabilité au gaz supérieure à 1-10⁻⁴ L/cm³/sec ;
c) utilisation d'un pycnomètre et d'un équipement d'analyse de la perméabilité au gaz pour mesure la porosité et la perméabilité au gaz du substrat d'anode produit à l'étape b) pour assurer la qualité du produit.

2. Procédé de fabrication de la couche d'électrodes d'une pile à combustible à oxyde solide selon la revendication 1, pouvant être plan, et le matériau de l'électrolyte étant YSZ, GDC, LSGM, SDC et YDC et le matériau de l'anode étant NiO+YSZ, NiO-GDC, NiO+LSGM, NiO+SOC et NiO+YDC et le matériau de la cathode étant LSM et LSCF.

3. Procédé de fabrication de la couche d'électrodes d'une pile à combustible à oxyde solide selon la revendication 1, le formeur de pores de l'étape a étant du graphite qui est décomposé thermiquement à une température élevée (supérieure à 200°C) ou qui est soumis à la pyrolise, la quantité de formeur de pores étant de 0,1 - 10% du matériau de l'anode ou l'indice du formeur de pores étant 0,1 ~ 10.

4. Procédé de fabrication de la couche d'électrodes d'une pile à combustible à oxyde solide selon la revendication 1, la température de frittage à l'étape b étant de 1700°C avec contrôle de l'étanchéité au gaz et du débit de gaz.

5. Procédé de fabrication de la couche d'électrodes d'une pile à combustible à oxyde solide selon la revendication 1, l'atmosphère de frittage spécifique de l'étape b étant de l'air ou des gaz inertes, le débit préféré de la pompe pour l'air comme air passant étant de 1 - 60 cm³/min (1 ~ 60 cc/min).

6. Procédé de fabrication de la couche d'électrodes d'une pile à combustible à oxyde solide selon la revendication 1, l'équipement utilisé à l'étape c pour mesurer la porosité étant un pycnomètre et pour la mesure de la perméabilité au gaz, la différence de pression entre les deux côtés de la pile à base d'anode étant de 0,0345 MPa (5 psig).
